# EUROPÄISCHE PATENTANMELDUNG

(11) **EP 1 231 055 A2**
(43) Veröffentlichungstag der Anmeldung: **14.08.2002**
(21) Anmeldenummer: 02002771.0
(22) Anmeldetag: 07.02.2002
(51) Int. Cl.: B32B 33/00, B32B 31/00, B32B 3/10, B32B 3/18

(54) **Wärmedämmender Verbundkörper und Verfahren zu seiner Herstellung**

(30) Priorität: 10.02.2001 DE 20102380 U
(71) Anmelder: Koch, Hans-Jürgen, 83253 Rimsting (DE)
(72) Erfinder: Michel, Wolfgang, 84489 Burghausen (DE); Koch, Hans-Jürgen, 83253 Rimsting/Chiemsee (DE)
(74) Vertreter: Strobel, Wolfgang, Dipl.-Ing.

(57) **Zusammenfassung**

Die vorliegende Erfindung betrifft einen wärmedämmenden Verbundkörper und ein Verfahren zu seiner Herstellung. Der wärmedämmende Verbundkörper (1) ist im wesentlichen aus einem Folienstreifenhaufen (3) aus flächenförmigen therrmoplastischen Folienstreifen (5) gebildet, wobei die Streifen (5) an Kontaktstellen (7) unter Bildung von Lufteinschlüssen (9) verschweißt sind.

## Beschreibung

Die vorliegende Erfindung betrifft einen wärmedämmenden Verbundkörper sowie ein Verfahren zu seiner Herstellung.

Es sind bereits eine Vielzahl von Verbundkörpern aus Kunststoffmaterial bekannt, die dazu dienen, eine verbesserte Wärmedämmung zu schaffen. In diesem Anwendungsbereich wurde der Werkstoff Polytetrafluorethylen (PTFE) aufgrund seiner hohen Temperaturbeständigkeit und seiner Nichtbrenn- und -schmelzbarkeit als ein wertvoller Werkstoff eingesetzt. Auch andere thermoplastische Kunststoffe haben dabei Verwendung gefunden.

Bei den bisherigen Verbundkörpern ergibt sich jedoch der Nachteil, daß sie relativ schwer sind und einen entsprechend hohen Materialeinsatz erfordern.

Der vorliegenden Erfindung liegt deshalb die Aufgabe zugrunde, einen flächenhaften Verbundkörper zu schaffen, der besonders leicht ist und eine hohe Wärmedämmung bietet.

Weiterhin liegt der vorliegenden Erfindung die Aufgabe zugrunde, ein Verfahren zur Herstellung des erfindungsgemäßen wärmedämmenden Verbundkörper anzugeben.

Gemäß der vorliegenden Erfindung ist der wärmedämmende Verbundkörper im wesentlichen aus einem Folienstreifenhaufen aus flächenförmigen thermoplastischen Folienstreifen gebildet, wobei die Streifen an Kontaktstellen unter Bildung von Lufteinschlüssen verschweißt sind.

Dadurch wird erreicht, daß aufgrund der Lufteinschlüsse eine besonders wirksame Wärmedämmung durch den Verbundkörper erzielt wird. Dabei wird zusätzlich der besondere Vorteil einer leichten Bauweise des Verbundkörpers einerseits und einer reduzierten Materialverwendung andererseits erreicht.

Vorteilhafterweise bestehen die Streifen des Folienstreifenhaufens aus Polytetrafluorethylen und aus mindestens einem schmelzbaren und verschweißbaren Polytetrafluorethylencopolymer, was zu einem besonders einfachen Verschweißvorgang und Schaffung des Verbundkörpers führt.

Alternativ kann der Folienstreifenhaufen auch aus modifizierten PTFE-Streifen ausgehend von dünnen Schälfolien gebildet sein, so daß auf eine Schmelzkleberfolie verzichtet werden kann, da modifiziertes PTFE mit sich selbst verschweißbar ist.

Als weitere thermoplastische Kunststoffe können Streifen aus Polyethylen, Polycarbonat, Polymethylmethakrylat oder Polyvinylchlorid verwendet werden.

Mit großem Vorteil weist der erfindungsgemäße Verbundkörper eine Vielzahl von Durchtrittsöffnungen auf, wodurch zusätzlich eine besondere Schalldämpfwirkung erzielt wird. Die Größe der Durchtrittsöffnungnen ist relativ gering und vorzugsweise in Form von Mikroporen ausgebildet. Durch die Durchtrittsöffnungen, die in den Folienstreifenhaufen eingebracht sind, werden die Lufteinschlußkammern geöffnet und der eintretende Schall wird in den geöffneten Kammern vielfach reflektiert und damit zumindest teilweise absorbiert.

Weiterhin kann der erfindungsgemäße Verbundkörper eine Abdeckschicht an wenigstens einer Seite aufweisen, die mit dem eine Kernschicht bildenden Streifenhaufen verbunden ist. Die Abdeckschicht kann dabei eine Folie oder Platte sein, so daß vorteilhafterweise als Endprodukt ein mehr oder weniger starrer Verbundkörper geschaffen werden kann. Dabei kann eine Abdeckschicht an beiden Seiten des Streifenhaufens vorgesehen sein.

Darüberhinaus kann vorteilhafter Weise die Abdeckschicht aus einer mikroperforierten Folie oder Platte gebildet sein, wodurch eine weitere Erhöhung der Schalldämpfung erzielt wird.

Die vorliegende Erfindung umfaßt auch ein Verfahren zur Herstellung eines Verbundkörpers, bei dem eine Schicht aus flächig angeordneter thermoplastischer Folie zu einem Streifenhaufen zerknüllt wird, und bei dem eine hohe Schicht aus Folienstreifen oder -lagen flächig unter einer Presse angeordnet und bei einer Temperatur, die im wesentlichen der Schmelztemperatur der thermoplastischen Folie entspricht, zu einer dünneren Schicht gepreßt und verschweißt wird.

Vorteilhafterweise wird die Schicht aus Polytetrafluorethylen mit mindestens einem flächig angeordneten Copolymer mit überwiegend Tetrafluorethylen-Einheiten gebildet, das gegenüber Polytetrafluorethylen als Schmelzkleber wirkt, und gemeinsam zu eine Streifenhaufen zerknüllt und die Schicht bei einer Temperatur vom 350 bis 400°C, vorzugsweise von 360 bis 380°C, zu einer dünneren Schicht gepreßt und verschweißt.

Alternativ umfaßt die vorliegende Erfindung auch ein Verfahren zur Herstellung eines Verbundkörpers bei dem dünne Schälfolien aus modifiziertem Polytetrafluorethylen zu einem Streifenhaufen zerknüllt werden, und bei dem die Schicht bei einer Temperatur vom 350 bis 400°C, vorzugsweise von 360 bis 380°C zu einer dünneren Schicht gepreßt und verschweißt wird.

Mit diesem einfachen Verfahren werden somit hochwärmedämmende Verbundkörper herstellbar.

Vorteilhafterweise wird der Streifenhaufen vor oder nach der Pressung mit einer Abdeckfolie oder -platte auf wenigstens einer Seite des Streifenhaufens versehen. Dies geschieht vorteilhafterweise dadurch, daß der schmelzverarbeitbare flächig angeordnete Streifenhaufen mit dem Abdeckmaterial verpreßt wird.

Die Verarbeitungstemperatur und der Preßdruck richten sich nach Art und Menge des schmelzverarbeitbaren Kunststoffs und sind vom Fachmann auf seinem Wissen auszuwählen bzw. anhand von einfachen Vorversuchen festzustellen. Während dieses Verfahrens umschließt der Kunststoffparzell die frei gebliebene Seite des flächig angeordneten Materials, wobei ein untrennbar verbundenes flächenhaftes Gebilde mit den hervorragenden oben angegebenen Eigenschaften entsteht.

Dabei ergibt sich der besondere Vorteil, daß die erfindungsgemäßen Produkte lagerungsfähig sind und je nach Dicke in Form von Rollen oder Platten in den Handel gebracht werden können.

Besonders bevorzugte Ausgestaltungen der Erfindung werden im folgenden näher erläutert.

Je nach dem beabsichtigten Einsatz wird das zerknüllte thermoplastische Folienmaterial als mehr oder weniger dicke Schicht zwischen einer Presse angeordnet. Falls erforderlich, können Strukturen in die Oberfläche des Folienmaterials geprägt werden, wenn das Preßwerkzeug eine entsprechende Oberflächenstruktur aufweist.

An der Oberseite oder Unterseite oder innerhalb des Verbundkörpers können Glasoder Synthesefasern oder Metalldrähte auch in Form von Geweben, Gelegen, Gewirken, Vliesen oder einzelnen Fäden, Drähten oder Seilen zur Verstärkung eingearbeitet sein.

Vorteilhaft ist der Einsatz von PTFE-Material wobei erfindungsgemäß Homo- und Copolymerisate des Polytetrafluorethylens in Betracht kommen.

Als Copolymer, das gegenüber PTFE als Schmelzkleber wirkt, kommen in erster Linie die Copolymeren in Betracht, die schon zu Verbunden von PTFE mit sich selbst oder anderen Materialien eingesetzt wurden. Copolymere mit Perfluoralkylperfluorvinylether-Einheiten sind aus der US-A 3 946 136 oder einem von TFE verschiedenen Perfluoralken wie Hexafluorpropen aus der US-A 2 833 686 bekannt.

Besonders bevorzugt sind Copolymere aus 90 bis 99,5 Gew.-% TFE und 0,5 bis Gew.-% Perfluoralkyl-perfluorvinylether mit Alkylresten von 1 bis 10 Kohlenstoffatomen, insbesondere von 1 bis 3 Kohlenstoffatomen. Dabei sind besonders geeignet Copolymere aus 95 bis 99 Gew.-% TFE und 5 bis 1 Gew.-% des Perfluoralkylvinylethers. Maßgeblich ist, daß das flächig angeordnete zerknüllte Material den Schmelzen eine mechanische Verankerung erlaubt und somit als Bindeglied zwischen dem PTFE und dem schmelzverarbeitenden Kunststoff wirken kann.

Eine weitere Ausgestaltung betrifft eine Ausführungsform, bei der die Enddicke ca. 2 mm beträgt. Die Schichtdicke kann je nach Verdichtungsgrad jedoch auch einige Millimeter betragen, beispielsweise bis zu 20 mm, wobei nach dem Abkühlen entsprechende Platte erhalten werden.

Durch das Pressen unter Temperatur bilden sich Hohlkammern, die mit Luft gefüllt, teilweise geschlossene Kammern ergeben. Dies führt insbesondere zur besonders erhöhten Wärmedämmeigenschaft der erfindungsgemäßen Verbundkörper.

Zusätzlich haben derartige Folien oder Platten ein spezifisches Gewicht unter 1, sind also schwimmfähig und eignen sich u.a. auch als Isoliermatierial für stark aggressive Flüssigkeiten.

In einer weiteren Ausführungsform kann die Weiterverarbeitung wie oben breites erwähnt, zu einem Verbundkörper in Sandwichbauweise mit dem Folienstreifenhaufen als Zwischenlage (Polster) führen.

Die so erhaltenen Verbundkörper zeichnen sich durch vorteilhafte Eigenschaften aus, die häufig über die der einzelnen Komponenten weit hinaus gehen. So kann beispielsweise bei Verbundkörpern mit einer sehr dicken Polsterzwischenlage neben einer guten Wärmeisolierung auch die Biegesteifigkeit erhöht werden.

Aufgrund der Mikroperforationen im Verbundkörper beziehungsweise der mikroperforierten Abdeckfolien kann zudem vorteilhafterweise eine erheblich verbesserte Schalldämpfeigenschaft des Verbundkörpers erzielt werden.

Wird der Verbundkörper aus PTFE-Material gebildet, eignet er sich insbesondere als Baumaterial der Brandklasse B1.

Nachfolgend werden zwei Beispiele der vorliegenden Erfindung angegeben.

### Beispiel 1:

In einer Vakuum-Multilayer-Presse wurde eine Schälfolienmaterial, 20 um dick, mit einer Folie aus einem Polymer aus 96 Gew.-% TFE und 4 Gew.-% Perfluor(npropyl-vinyl)ether, Schmelzindex (MFI) bei 372°C und 5 kg Last 10g/min, gemeinsam in einem Reißwolf zu Bändern in einer Breite von 5 bis 10 mm geschnitten und in dieser zerknüllten, holzwollenartigen Form zwischen den Preßplatten 300x400 mm in einer Schichtdicke von 10 cm gleichmäßig eingebracht. Die Aufheizung von Raumtemperatur bis 370°C (die 12 Minuten eingehalten wurde) erfolgt in Laufe von etwa 30 Minuten bei zusammengefahrenen Preßplatten, Preßplattenabstand 5 mm. Anschließend wurde die Presse durch Wasserkühlung abgekühlt. Das erhaltene Plattenmaterial ist weich, geschmeidig und flexibel.

### Beispiel 2:

Als Deck- und Bodenfläche nach Beispiel 1 wurde eine 200 µm starke modifizierte PTFE-Folie gelegt. Das so erhaltene Flächengebilde ist starr und hat eine sehr hohe isolierende Wirkung.

Bevorzugte Ausführungsformen der folgenden Erfindung sind in den beigefügten Zeichnungen dargestellt. Darin zeigt:
- Fig. 1: im Querschnitt eine schematische Darstellung eines erfindungsgemäßen Verbundkörpers;
- Fig. 2: im Querschnitt eine schematische Darstellung eines erfindungsgemäßen Verbundkörpers in Sandwichbauweise; und
- Fig. 3: eine ähnliche Ausführungsform des Verbundkörpers nach Fig. 1 jedoch mit Durchtrittsöffnungen zur Schalldämpfung.

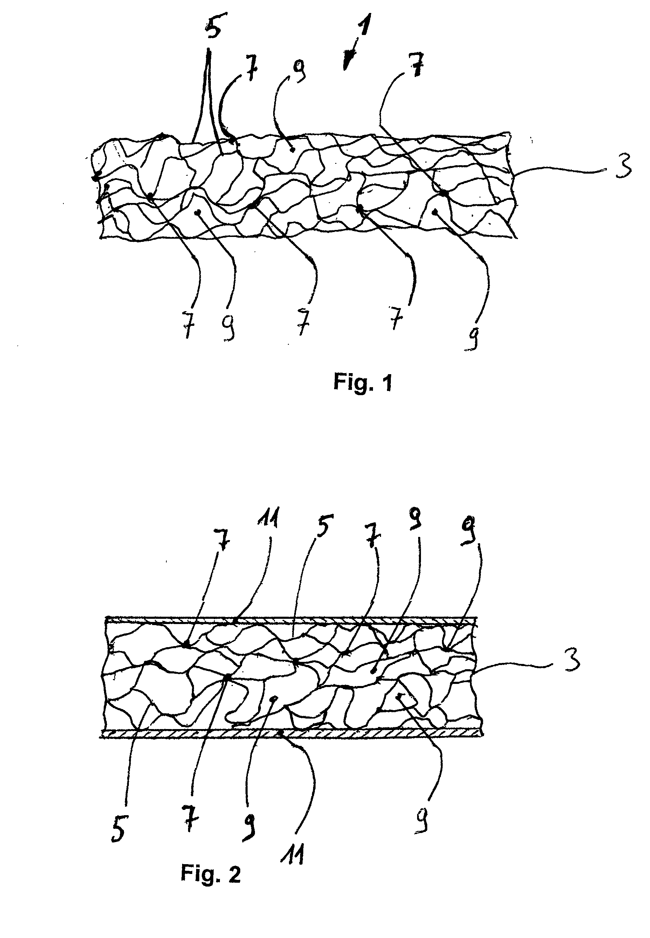

In Fig. 1 ist ein erfindungsgemäßer Verbundkörper 1 dargestellt, der aus einem Streifenhaufen 3 gebildet ist. Der Streifenhaufen 3 weist Folienstreifen 5 auf, die an Kontaktstellen 7 verschweißt sind. Lufteinschlüsse 9 sorgen für eine besonders gute Wärmedämmung.

In Fig. 2 ist der erfindungsgemäße Verbundkörper in Sandwichbauweise dargestellt. An der Oberseite und an der Unterseite des Streifenhaufens 3 ist jeweils eine Abdeckfolie 11 angeordnet. Diese ist mit dem Streifenhaufen entsprechend verschweißt.

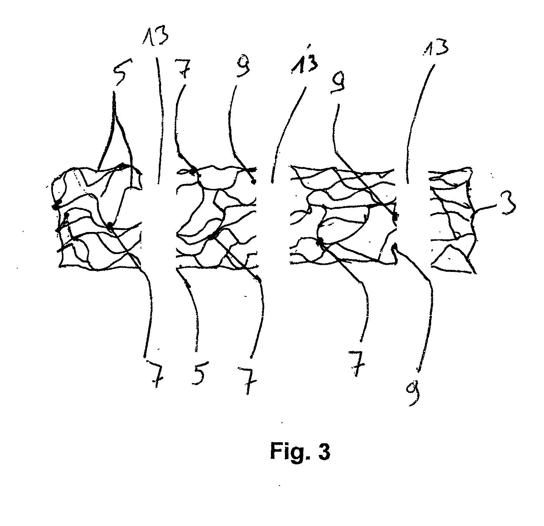

Das Ausführungsbeispiel gemäß Fig. 3 entspricht im wesentlichen im Ausführungsbeispiel von Fig. 1. Wie ersichtlich sind zusätzlich Durchtrittsöffnungen 13 in dem Streifenhaufen 3 vorgesehen, so daß der darin eintretende Schall in den offenen Luftkammern eine deutliche Dämpfung erfährt.

Mit der vorliegenden Erfindung wird somit besonders vorteilhaft ein leichter und besonders gut wärmedämmender Verbundkörper geschaffen, wobei zusätzlich der besondere Vorteil auch der Schalldämpfung erzielt wird.

Weiterhin umfaßt die vorliegende Erfindung in vorteilhafter Weise ein einfaches Herstellungsverfahren des Verbundkörpers.

## Patentansprüche

1. Wärmedämmender Verbundkörper, der im wesentlichen aus einem Folienstreifenhaufen (3) aus flächenförmigen thermoplastischen Folienstreifen (5) gebildet ist, wobei die Streifen (5) an Kontaktstellen (7) unter Bildung von Lufteinschlüssen (9) verschweißt sind.

2. Verbundkörper nach Anspruch 1, **dadurch gekennzeichnet, daß** die Streifen (5) aus Polytetrafluorethylen und aus mindestens einem schmelzbaren und verschweißbaren Polytetrafluorethylencopolymer bestehen.

3. Verbundkörper nach Anspruch 1, **dadurch gekennzeichnet, daß** die Streifen (5) aus modifiziertem Polytetrafluorethylen bestehen.

4. Verbundkörper nach Anspruch 1, **dadurch gekennzeichnet, daß** die Streifen (5) aus Polyethylen bestehen.

5. Verbundkörper nach Anspruch 1, **dadurch gekennzeichnet, daß** die Streifen (5) aus Polycarbonat bestehen.

6. Verbundkörper nach Anspruch 1, **dadurch gekennzeichnet, daß** die Streifen (5) aus Polymethylmethakrylat bestehen.

7. Verbundkörper nach Anspruch 1, **dadurch gekennzeichnet, daß** die Streifen (5) aus Polyvinylchlorid bestehen.

8. Verbundkörper nach einem der Ansprüche 1 bis 7, **dadurch gekennzeichnet, daß** er eine Vielzahl von Durchtrittsöffnungen (13) aufweist.

9. Verbundkörper nach einem der Ansprüche 1 bis 8, **dadurch gekennzeichnet, daß** eine Abdeckschicht (11) an wenigstens einer Seite des Verbundkörpers vorgesehen ist, die mit dem eine Kernschicht bildenden Streifenhaufen (3) verbunden ist.

10. Verbundkörper nach Anspruch 9, **dadurch gekennzeichnet, daß** die Abdeckschicht (11) aus einer mikroperforierten Folie oder Platte gebildet ist.

11. Verbundkörper nach einem der Ansprüche 1 bis 10, **dadurch gekennzeichnet, daß** an der Oberseite oder Unterseite oder innerhalb des Verbundkörpers Glas- oder Synthesefasern oder Metalldrähte auch in Form von Geweben, Gelegen, Gewirken, Vliesen oder einzelnen Fäden, Drähten oder Seilen zur Verstärkung eingearbeitet sind.

12. Verfahren zur Herstellung eines Verbundkörpers nach einem der Ansprüche 1 bis 10, **dadurch gekennzeichnet, daß** eine Schicht aus flächig angeordneter thermoplastischer Folie zu einem Streifenhaufen (3) zerknüllt wird,
daß eine hohe Schicht aus Folienstreifen flächig unter einer Presse angeordnet und bei einer Temperatur, die im wesentlichen der Schmelztemperatur der thermoplastischen Folie entspricht, zu einer dünneren Schicht gepreßt und verschweißt wird.

13. Verfahren nach Anspruch 12, **dadurch gekennzeichnet, daß** die Schicht aus Polytetrafluorethylen mit mindestens einem flächig angeordneten Copolymer mit überwiegend Tetrafluorethylen-Einheiten gebildet wird, das gegenüber Polytetrafluorethylen als Schmelzkleber wirkt, gemeinsam zu einem Streifenhaufen (3) zerknüllt wird,
daß die Schicht bei einer Temperatur von 350 bis 400 °C, vorzugsweise von 360 bis 380 °C zu einer dünneren Schicht gepreßt und verschweißt wird.

14. Verfahren nach Anspruch 12, **dadurch gekennzeichnet, daß** dünne Schälfolien aus modifiziertem Polytetrafluorethylen zu einem Streifenhaufen (3) zerknüllt werden, und daß die Schicht bei einer Temperatur von 350 bis 400 °C, vorzugsweise von 360 bis 380 °C zu einer dünneren Schicht gepreßt und verschweißt wird.

15. Verfahren nach einem der Ansprüche 12 bis 14, **dadurch gekennzeichnet, daß** der Streifenhaufen vor oder nach der Pressung mit einer Abdeckfolie (11) oder -platte auf wenigstens einer Seite des Streifenhaufens versehen wird.

16. Verfahren nach Anspruch 15, **dadurch gekennzeichnet, daß** der schmelzverarbeitbare flächig angeordnete Streifenhaufen (3) mit dem Abdeckmaterial (11) verpreßt wird.
